(19) Europäisches Patentamt / European Patent Office / Office européen des brevets

(11) **EP 3 506 478 A1**

(12) **EUROPEAN PATENT APPLICATION**
published in accordance with Art. 153(4) EPC

(43) Date of publication:
**03.07.2019  Bulletin 2019/27**

(51) Int Cl.:
***H02M 3/155*** (2006.01)

(21) Application number: **17844990.6**

(22) Date of filing: **21.06.2017**

(86) International application number:
**PCT/CN2017/089397**

(87) International publication number:
**WO 2018/040684 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **29.08.2016  CN 201610754687**

(71) Applicant: ZTE Corporation
Shenzhen, Guangdong 518057 (CN)

(72) Inventors:
• **WANG, Linguo**
**Shenzhen**
**Guangdong 518057 (CN)**
• **GAO, Wei**
**Shenzhen**
**Guangdong 518057 (CN)**
• **ZHANG, Yang**
**Shenzhen**
**Guangdong 518057 (CN)**
• **ZHANG, Bin**
**Shenzhen**
**Guangdong 518057 (CN)**

(74) Representative: **Regimbeau**
**20, rue de Chazelles**
**75847 Paris Cedex 17 (FR)**

(54) **POWER CIRCUIT, POWER CIRCUIT CONTROL METHOD, AND STORAGE MEDIUM**

(57)    The present invention provides a power circuit, a power circuit control method and a storage medium. The power circuit includes: a step-up/down converter (51) and a control circuit (52). The step-up/down converter is configured to convert an input voltage (Vin) to an output voltage (Vout). The control circuit is configured to control a working mode of the step-up/down converter according to the input voltage so as to ensure that the output voltage is greater than or equal to a first output voltage amplitude (Vout1) and is less than or equal to a second output voltage amplitude (Vout2). When the input voltage is lower than a preset low voltage threshold (Vin2), the output voltage is controlled to be fixed at the first output voltage amplitude; when the input voltage is included between the preset low voltage threshold and a preset high voltage threshold (Vin3), the output voltage is controlled to be included between the first output voltage amplitude and the second output voltage amplitude; and when the input voltage is higher than the preset high voltage threshold, the output voltage is controlled to be fixed at the second output voltage amplitude.

FIG. 5

## Description

## TECHNICAL FIELD

The present invention relates to the technical field of intermediate bus and, in particular, to a power circuit, a power circuit control method and a storage medium.

## BACKGROUND

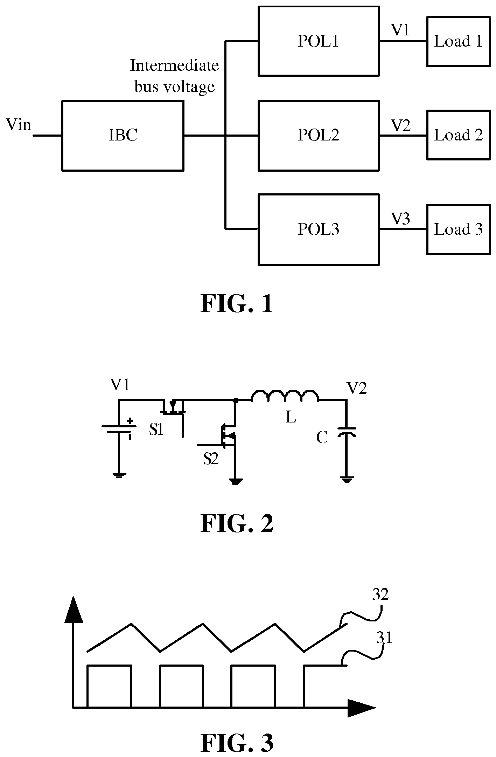

In existing communication systems, the isolated intermediate bus architecture (IBA) is widely used for the sake of safety and power efficiency. In this architecture, the input voltage of the system is first converted to an intermediate voltage by an isolated intermediate bus converter (IBC) and then converted to voltages required by various load circuits by a number of post-stage non-isolated point-of-load (POL). FIG. 1 is a schematic diagram of a power architecture including an intermediate bus in a communication system. As shown in FIG. 1, an input voltage is inputted to an IBC and converted to an intermediate bus voltage by the IBC. Then, the intermediate bus voltage is inputted to multiple POLs, including POL1, POL2 and POL3, and converted to voltages V1, V2 and V3 required by load 1, load 2 and load 3 by the multiple POLs, respectively.

Since the range of the input voltage to which the POL at the post stage of the IBC can adapt is limited, the IBC needs to control the voltage outputted to the POL by the IBC within a certain range. To adapt to different communication systems, especially systems with a backup battery backup, the IBC often needs to adapt to a wide input voltage range. For example, the input voltage range in communication systems is usually from 36 V to 75 V. When the IBC transforms the input voltage, a wide input voltage range requires energy storage components such as inductors to continuously store and release more energy during the voltage conversion process, resulting in an increase in the volume and loss of the energy storage components.

## SUMMARY

To solve the preceding technical problems, embodiments of the present invention provide a power circuit, a power circuit control method and a storage medium, so as to reduce loss of an energy storage component in a power circuit during voltage conversion.

The technical solutions of the present invention are implemented as follows.

A first aspect provides a power circuit. The power circuit includes: a step-up/down converter and a control circuit.

The step-up/down converter is configured to convert an input voltage to an output voltage.

The control circuit is configured to control a working mode of the step-up/down converter according to the input voltage so as to ensure that the output voltage is greater than or equal to a first output voltage amplitude and is less than or equal to a second output voltage amplitude.

When the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

In an optional implementation mode of the first aspect, the control circuit is configured to: when the input voltage is lower than the preset low voltage threshold, control the step-up/down converter to work in a step-up mode; when the input voltage is higher than the preset high voltage threshold, control the step-up/down converter to work in a step-down mode; and when the input voltage is included between the preset low voltage threshold and the preset high voltage threshold, control the step-up/down converter to work in a voltage-regulating mode.

In an optional implementation mode of the first aspect, the control circuit includes a control signal generation circuit and a comparison and control circuit.

The control signal generation circuit is configured to: when the input voltage is lower than the preset low voltage threshold, generate a step-up control signal; when the input voltage is higher than the preset high voltage threshold, generate a step-down control signal; and when the input voltage is included between the preset low voltage threshold and the preset high voltage threshold, generate a voltage-regulating control signal.

Correspondingly, the comparison and control circuit is configured to: when the control signal generation circuit generates the step-up control signal, control the step-up/down converter to work in the step-up mode; when the control signal generation circuit generates the step-down control signal, control the step-up/down converter to work in the step-down mode; and when the control signal generation circuit generates the voltage-regulating control signal, control the step-up/down converter to work in the voltage-regulating mode.

In an optional implementation mode of the first aspect, the step-up/down converter includes a step-up converter and a step-down converter.

The comparison and control circuit is configured to: when the control signal generation circuit generates the step-up control signal, switch on the step-up converter to work and switch off the step-down converter; when the control signal generation circuit generates the step-down control signal, switch on the step-down converter to work and switch off the step-up converter; and when the control signal generation circuit generates the voltage-regulating control signal, switch off the step-up converter and the step-down converter to not work.

In an optional implementation mode of the first aspect, the control signal generation circuit includes a reference signal generation circuit.

The reference signal generation circuit is configured to generate a reference signal according to the input voltage. When the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is included between the preset low voltage threshold and the preset high voltage threshold, the voltage of the reference signal is at a fixed ratio to the input voltage.

Correspondingly, the comparison and control circuit includes a feedback control circuit.

The feedback control circuit is configured to compare the output voltage with the voltage of the reference signal so as to control the step-up/down converter to regulate the output voltage to the voltage of the reference signal.

In an optional implementation mode of the first aspect, the control signal generation circuit includes a duty cycle generation circuit.

The duty cycle generation circuit is configured to generate a duty cycle amplitude according to the input voltage, where the duty cycle amplitude is determined according to the input voltage, the preset low voltage threshold, the preset high voltage threshold, and a transformer winding turns ratio of the power circuit.

Correspondingly, the comparison and control circuit includes a pulse width modulation (PWM) comparison circuit.

The PWM comparison circuit is configured to generate a PWM control signal according to the duty cycle amplitude. A duty cycle of the PWM control signal is the duty cycle amplitude. The PWM control signal is configured to control the step-up/down converter to regulate the output voltage to be greater than or equal to the first output voltage amplitude and to be less than or equal to the second output voltage amplitude.

In an optional implementation mode of the first aspect, the duty cycle generation circuit is configured to generate a step-up mode duty cycle amplitude D1 when the input voltage is lower than the preset low voltage threshold, where $D1 = 1 - \dfrac{Vin}{N \times Vout1}$, where N denotes the transformer winding turns ratio of the power circuit, N is equal to 1 for a non-isolated power circuit, Vin denotes the input voltage, and Vout1 denotes the first output voltage amplitude.

The duty cycle generation circuit is further configured to generate a step-down mode duty cycle amplitude D2 when the input voltage is higher than the preset high voltage threshold, where $D2 = \dfrac{N \times Vout2}{Vin}$, where Vout2 denotes the second output voltage amplitude.

The duty cycle generation circuit is further configured to generate a voltage-regulating mode duty cycle amplitude D3 when the input voltage is included between the preset low voltage threshold and the preset high voltage threshold, where D3 = 1.

In an optional implementation mode of the first aspect, the control signal generation circuit includes a switching frequency generation circuit; and correspondingly, the comparison and control circuit includes a resonant circuit.

The switching frequency generation circuit is configured to generate a switching frequency control signal according to the input voltage. When the input voltage is lower than the preset low voltage threshold, a switching frequency of the switching frequency control signal is less than a resonant frequency of the resonant circuit; when the input voltage is higher than the preset high voltage threshold, the switching frequency of the switching frequency control signal is greater than the resonant frequency of the resonant circuit; and when the input voltage is included between the preset low voltage threshold and the preset high voltage threshold, the switching frequency of the switching frequency control signal is equal to the resonant frequency of the resonant circuit.

The resonant circuit is configured to determine a resonance mode according to the switching frequency of the switching frequency control signal so as to control the step-up/down converter to regulate the output voltage to be greater than or equal to the first output voltage amplitude and less than or equal to the second output voltage amplitude.

A second aspect provides a power circuit control method. The method includes:

Controlling a working mode of a power circuit according to an input voltage so as to ensure that an output voltage of the power circuit is greater than or equal to a first output voltage amplitude and is less than or equal to a second output voltage amplitude.

When the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

In an optional implementation mode of the second aspect, the controlling the working mode of the power circuit according to the input voltage includes:

when the input voltage is lower than the preset low voltage threshold, controlling the power circuit to work in a step-up mode; when the input voltage is higher than the preset high voltage threshold, controlling the power circuit to work in a step-down mode; and when the input voltage is included between the preset low voltage threshold and the preset high voltage threshold, controlling the power circuit to work in a voltage-regulating mode.

In an optional implementation mode of the second aspect, the step of controlling the working mode of the power circuit according to the input voltage includes:

Generating a control signal according to the input voltage; and
Controlling the working mode of the power circuit according to the control signal.

In an optional implementation mode of the second aspect, the step of generating the control signal according to the input voltage includes:

When the input voltage is lower than the preset low voltage threshold, generating a step-up control signal; when the input voltage is higher than the preset high voltage threshold, generating a step-down control signal; and when the input voltage is included between the preset low voltage threshold and the preset high voltage threshold, generating a voltage-regulating control signal.

The step of controlling the working mode of the power circuit according to the control signal includes:
When the step-up control signal is generated, controlling the power circuit to work in the step-up mode; when the step-down control signal is generated, controlling the power circuit to work in the step-down mode; and when the voltage-regulating control signal is generated, controlling the power circuit to work in the voltage-regulating mode.

In an optional implementation mode of the second aspect, the step of generating the control signal according to the input voltage includes:
Generating a reference signal according to the input voltage. When the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is included between the preset low voltage threshold and the preset high voltage threshold, the voltage of the reference signal is at a fixed ratio to the input voltage.

The step of controlling the working mode of the power circuit according to the control signal includes:
Comparing the output voltage with the voltage of the reference signal so as to control the power circuit to regulate the output voltage to the voltage of the reference signal.

In an optional implementation mode of the second aspect, the step of generating the control signal according to the input voltage includes:
Generating a duty cycle amplitude according to the input voltage. The duty cycle amplitude is determined according to the input voltage, the preset low voltage threshold, the preset high voltage threshold, and a transformer winding turns ratio of the power circuit.

The step of controlling the working mode of the power circuit according to the control signal includes:
Generating a PWM control signal according to the duty cycle amplitude, where a duty cycle of the PWM control signal is the duty cycle amplitude to control the power circuit to regulate the output voltage to be greater than or equal to the first output voltage amplitude and to be less than or equal to the second output voltage amplitude.

In an optional implementation mode of the second aspect, the step of generating the duty cycle amplitude according to the input voltage includes:

Generating a step-down mode duty cycle amplitude D1 when the input voltage is higher than the preset high voltage threshold, where $D1 = \dfrac{N \times Vout1}{Vin}$,

where N denotes the transformer winding turns ratio of the power circuit, N is equal to 1 for a non-isolated power circuit, Vin denotes the input voltage, and Vout1 denotes the second output voltage amplitude;
Generating a step-up mode duty cycle amplitude D2 when the input voltage is lower than the preset low voltage threshold, where $D2 = 1 - \dfrac{Vin}{N \times Vout2}$,

where Vout2 denotes the first output voltage amplitude; and
Generating a voltage-regulating mode duty cycle amplitude D3 when the input voltage is included between the preset low voltage threshold and the preset high voltage threshold, where D3 = 1.

In an optional implementation mode of the second aspect, the step of generating the control signal according to the input voltage includes:
Generating a switching frequency control signal according to the input voltage. When the input voltage is lower than the preset low voltage threshold, a switching frequency of the switching frequency control signal is less than a resonant frequency of the power circuit; when the input voltage is higher than the preset high voltage threshold, the switching frequency of the switching frequency control signal is greater than the resonant frequency of the power circuit; and when the input voltage is included between the preset low voltage threshold and the preset high voltage threshold, the switching frequency of the switching frequency control signal is equal to the resonant frequency of the power circuit.

The step of controlling the working mode of the power circuit according to the control signal includes:
Determining a resonance mode according to the switching frequency of the switching frequency control signal so as to control the power circuit to regulate the output voltage to be greater than or equal to the first output voltage amplitude and to be less than or equal to the second output voltage amplitude.

A third aspect provides a computer-readable storage medium storing computer programs, where the computer programs cause a computer to perform the following processing:

Controlling a working mode of a power circuit according to an input voltage of the power circuit so as to ensure that an output voltage of the power circuit is greater than or equal to a first output voltage amplitude and is less than or equal to a second output voltage amplitude.

When the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

In an optional implementation mode of the third aspect, the step of controlling the working mode of the power circuit according to the input voltage includes:

When the input voltage is lower than the preset low voltage threshold, controlling the power circuit to work in a step-up mode; when the input voltage is higher than the preset high voltage threshold, controlling the power circuit to work in a step-down mode; and when the input voltage is included between the preset low voltage threshold and the preset high voltage threshold, controlling the power circuit to work in a voltage-regulating mode.

In an optional implementation mode of the third aspect, the step of controlling the working mode of the power circuit according to the input voltage includes:

Generating a control signal according to the input voltage; and
Controlling the working mode of the power circuit according to the control signal.

In an optional implementation mode of the third aspect, the step of generating the control signal according to the input voltage includes:

When the input voltage is lower than the preset low voltage threshold, generating a step-up control signal; when the input voltage is higher than the preset high voltage threshold, generating a step-down control signal; and when the input voltage is included between the preset low voltage threshold and the preset high voltage threshold, generating a voltage-regulating control signal.

The step of controlling the working mode of the power circuit according to the control signal includes:

When the step-up control signal is generated, controlling the power circuit to work in the step-up mode; when the step-down control signal is generated, controlling the power circuit to work in the step-down mode; and when the voltage-regulating control signal is generated, controlling the power circuit to work in the voltage-regulating mode.

In an optional implementation mode of the third aspect, the step of generating the control signal according to the input voltage includes:

Generating a reference signal according to the input voltage. When the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is included between the preset low voltage threshold and the preset high voltage threshold, the voltage of the reference signal is at a fixed ratio to the input voltage.

The step of controlling the working mode of the power circuit according to the control signal includes:

Comparing the output voltage with the voltage of the reference signal so as to control the power circuit to regulate the output voltage to the voltage of the reference signal.

In an optional implementation mode of the third aspect, the step of generating the control signal according to the input voltage includes:

Generating a duty cycle amplitude according to the input voltage. The duty cycle amplitude is determined according to the input voltage, the preset low voltage threshold, the preset high voltage threshold, and a transformer winding turns ratio of the power circuit.

The step of controlling the working mode of the power circuit according to the control signal includes:

Generating a PWM control signal according to the duty cycle amplitude, where a duty cycle of the PWM control signal is the duty cycle amplitude to control the power circuit to regulate the output voltage to be greater than or equal to the first output voltage amplitude and to be less than or equal to the second output voltage amplitude.

In an optional implementation mode of the third aspect, the step of generating the duty cycle amplitude according to the input voltage includes:

Generating a step-down mode duty cycle amplitude D1 when the input voltage is higher than the preset high voltage threshold, where $D1 = \dfrac{N \times Vout1}{Vin}$,

where N denotes the transformer winding turns ratio of the power circuit, N is equal to 1 for a non-isolated power circuit, Vin denotes the input voltage, and Vout1 denotes the second output voltage amplitude;

Generating a step-up mode duty cycle amplitude D2 when the input voltage is lower than the preset low voltage threshold, where $D2 = 1 - \dfrac{Vin}{N \times Vout2}$,

where Vout2 denotes the first output voltage amplitude; and

Generating a voltage-regulating mode duty cycle amplitude D3 when the input voltage is included between the preset low voltage threshold and the preset high voltage threshold, where D3 = 1.

In an optional implementation mode of the third aspect, the step of generating the control signal according to the input voltage includes:

Generating a switching frequency control signal according to the input voltage signal. When the input voltage is lower than the preset low voltage threshold, a switching frequency of the switching frequency control signal is less than a resonant frequency of the power circuit; when the input voltage is higher than the preset high voltage threshold, the switching frequency of the switching frequency control signal is greater than the resonant frequency of the power circuit; and when the input voltage is included between the preset low voltage threshold and the preset high voltage threshold, the switching frequency of the switching frequency control signal is equal to the resonant frequency of the power circuit.

The step of controlling the working mode of the power circuit according to the control signal includes:

Determining a resonance mode according to the switching frequency of the switching frequency control signal so as to control the power circuit to regulate the output voltage to be greater than or equal to the first output voltage amplitude and to be less than or equal to the second output voltage amplitude.

In the power circuit, power circuit control method and storage medium provided in embodiments of the present invention, the control circuit controls the working mode of the step-up/down converter according to the input voltage, so that the output voltage is greater than or equal to the first output voltage amplitude and is less than or equal to the second output voltage amplitude and so that the output voltage of the power circuit is included within a preset range. Within this preset range, the power circuit works in a voltage-regulating mode, so that the loss of the energy storage component in the power circuit during the voltage conversion is reduced; furthermore, the output voltage of the power circuit is included within a preset range to meet the requirements of subsequent POL.

**BRIEF DESCRIPTION OF DRAWINGS**

FIG. 1 is a schematic diagram of a power architecture including an intermediate bus in a communication system.

FIG. 2 is a schematic diagram of an IBC circuit in the existing art.

FIG. 3 is a schematic diagram of working currents of the IBC circuit of FIG. 2.

FIG. 4 is a schematic diagram of another IBC circuit in the existing art.

FIG. 5 is a structure diagram of power circuit embodiment one according to optional embodiments of the present invention.

FIG. 6 is a structure diagram of power circuit embodiment two according to optional embodiments of the present invention.

FIG. 7 is a graph illustrating a function relationship between an input voltage and an intermediate bus output voltage of an IBC circuit according to optional embodiments of the present invention.

FIG. 8 is a structure diagram of power circuit embodiment three according to optional embodiments of the present invention.

FIG. 9 is a structure diagram of power circuit embodiment four according to optional embodiments of the present invention.

FIG. 10 is a structure diagram of power circuit embodiment five according to optional embodiments of the present invention.

FIG. 11 is a structure diagram of power circuit embodiment six according to optional embodiments of the present invention.

FIG. 12 is a structure diagram of power circuit embodiment seven according to optional embodiments of the present invention.

FIG. 13 is a structure diagram of power circuit embodiment eight according to optional embodiments of the present invention.

FIG. 14 shows a gain curve of the power circuit of FIG. 13 as the resonant frequency varies.

FIG. 15 is a flowchart of power circuit control method embodiment one according to optional embodiments of the present invention.

FIG. 16 is a flowchart of power circuit control method embodiment two according to optional embodiments of the present invention.

FIG. 17 is a flowchart of power circuit control method embodiment three according to optional embodiments of the present invention.

FIG. 18 is a flowchart of power circuit control method embodiment four according to optional embodiments of the present invention.

FIG. 19 is a flowchart of power circuit control method embodiment five according to optional embodiments of the present invention.

**DETAILED DESCRIPTION**

Technical solutions in optional embodiments of the present invention will be described clearly and completely in conjunction with the accompanying drawings in optional embodiments of the present invention.

To explain a power circuit provided in optional embodiments of the present invention, a detailed description of the basic structure and working principle of an IBC circuit are firstly described in detail base on the IBC circuit in the existing art.

FIG. 2 is a schematic diagram of an IBC circuit in the existing art. As shown in FIG. 2, switching transistors S1 and S2 are controlled to generate a pulse width modulation (PWM) signal to convert an input voltage V1 to an output voltage V2; an inductor L serves as an energy storage component and a capacitor C is a filter capacitor. In the circuit shown in FIG. 2, $V2 = D \times V1$, where D denotes a duty cycle of the PWM signal. When the input voltage V1 has a wide range of variation, the duty cycle D varies more, so that the inductor L needs to continuously store and release more energy during the voltage conversion, resulting in an increase in the volume and loss of the inductor L. FIG. 3 is a schematic diagram of working currents of the IBC circuit of FIG. 2. In FIG. 3, a curve 31 represents the drive current of the switching transistor S1, and a curve 32 represents the working current of the inductor L. It can be seen from FIG. 3 that the current flowing through the inductor L is changing all the time, and the inductor L needs to continuously store and release more energy during the voltage conversion. Therefore, the volume and loss of the inductor L will increase.

In practical applications, in view of safety requirements, electrical isolation is required between the input and the output of the IBC, usually using a full bridge circuit or other isolated topology circuits provided with a transformer. In such a circuit, the input voltage is converted into a high-frequency alternating current (AC) signal by an inverter circuit such as a bridge inverter circuit at the primary side of the transformer; the high-frequency AC signal is coupled to the secondary side through the transformer and then rectified by a rectifier circuit at the secondary side of the transformer, so as to obtain an output direct current (DC) voltage. Therefore, more power devices are required. To solve the problem in which the stress margin of the power devices in an isolated IBC circuit increases due to a wide input voltage range, a two-stage circuit as shown in FIG. 3 is often used.

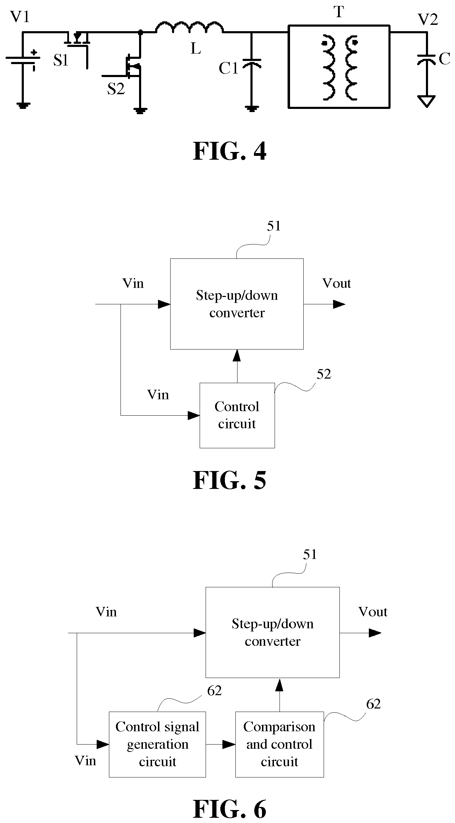

FIG. 4 is a schematic diagram of another IBC circuit in the existing art. As shown in FIG. 4, based on the IBC circuit shown in FIG. 2, a transformer T1 and a capacitor C1 are further provided. A real circuit further includes other devices behind the transformer, but these devices are not shown in the figure. An IBC circuit shown in FIG. 4 includes a non-isolated pre-stage voltage regulator (including switching transistors S1 and S2, inductor L and capacitor C1) and a transformer-isolated post-stage circuit (not shown). The pre-stage voltage regulator makes the transformer-isolated post-stage circuit deal with only a fixed input voltage, avoiding the problem of stress caused by a wide input voltage range. However, this IBC circuit does not solve the problem in which the wide input voltage range leads to large variance of the duty cycle of the pre-stage voltage regulator. As a result, the problem of large volume and loss of the energy storage component such as the inductor L still exists.

The power supply of various electronic devices, other than the IBC circuit, has a power circuit for voltage transformation, so as to adapt to different input voltage ranges. The function of the power circuit is to convert the input voltage with a wide input voltage range to an input voltage with a fixed output voltage range. However, the problem of the IBC circuits of FIG. 2 to FIG. 4 also exists in various power circuits (in which only the input voltage can be stepped up or stepped down).

In view of the problem in the existing art, an optional embodiment one provides a power circuit and a power circuit control method to solve the problem in which an energy storage component in an existing power circuit needs to continuously store and release a large amount of energy and thus both the volume and loss of the energy storage component are large.

FIG. 5 is a structure diagram of power circuit embodiment one according to optional embodiments of the present invention. As shown in FIG. 5, the power circuit provided in this embodiment includes a step-up/down converter 51 and a control circuit 52.

The step-up/down converter 51 is a basic circuit of the power circuit and is used for voltage conversion and voltage transformation of the power circuit. An input voltage of the power circuit is converted to an intermediate bus output voltage by the step-up/down converter 51. To enable the power circuit to adapt to a wide input voltage range, it is needed to control the working mode of the step-up/down converter 51. The control circuit 52 is also connected to the input voltage of the power circuit, and controls the working mode of the step-up/down converter 51 according to the input voltage. The control circuit 52 controls the step-up/down converter 51 to work in a step-up, step-down or voltage-regulating mode according to different values of the input voltage. The principle for the control circuit 52 to control the working mode of the step-up/down converter 51 is to control the step-up/down converter 51 according to different values of the input voltage such that the output voltage of the power circuit is included within a preset range, i.e., greater than or equal to a first output voltage amplitude and less than or equal to a second output voltage amplitude. When the input voltage is lower than a preset low voltage threshold, the control circuit 52 controls the output voltage to be fixed at the first output voltage amplitude; when the input voltage is included between the preset low voltage threshold and a preset high voltage threshold, the control circuit 52 controls the output voltage to be included between the first output voltage amplitude and the second output voltage amplitude; and when the input voltage is higher than the preset high voltage threshold, the control circuit 52 controls the output voltage to be fixed at the second output voltage amplitude.

When the input voltage is lower than the preset low voltage threshold, the control circuit 52 controls the step-up/down converter 51 to work in a step-up mode; when the input voltage is higher than the preset high voltage threshold, the control circuit 52 controls the step-up/down converter 51 to work in a step-down mode; and when the input voltage is included between the preset low voltage threshold and the preset high voltage threshold, the control circuit 52 controls the step-up/down converter 51 to work in a voltage-regulating mode.

To perform the step up/down operation, the step-up/down converter 51 must have an energy storage component such as an inductor. When the step-up/down converter 51 performs the step up/down operation, the energy storage component stores or releases energy. In this embodiment, the control circuit 52 controls, according to different values of the input voltage, the step-up/down converter 51 to work in a voltage-regulating mode in addition to a step-up mode and a step-down mode. In the voltage-regulating mode, the step-up/down converter 51 does not need to perform the step-up/down operation, so that the energy storage component such as the inductor does not need to store or release energy and thus in the voltage-regulating mode, the energy storage component in the step-up/down converter 51 has the optimal volume and efficiency.

In addition, it can be seen from the power architecture including the intermediate bus shown in FIG. 1 that multiple POLs are connected at a post stage of the IBC circuit, and each POL is used to supply power to the load. Therefore, in the power circuit provided in this embodiment, the step of controlling the output voltage to be greater than or equal to the first output voltage amplitude and less than or equal to the second output voltage amplitude does not affect the power supply for the load. Of course, the output voltage range of the step-up/down converter 51 should not be too wide and needs to be included within the input voltage range of each load power supply connected to the output end of the power circuit.

In the power circuit provided in this embodiment, the control circuit controls the working mode of the step-up/down converter according to the input voltage, so that the output voltage is greater than or equal to the first output voltage amplitude and less than or equal to the second output voltage amplitude and thus the output voltage of the power circuit is included within a preset range. Within this preset range, the power circuit works in a voltage-regulating mode, so that the loss of the energy storage component in the power circuit during the voltage conversion is reduced and the output voltage of the power circuit is included within a preset range to meet the requirements of subsequent POL power.

FIG. 6 is a structure diagram of power circuit embodiment two according to optional embodiments of the present invention. As shown in FIG. 6, based on FIG. 5, the control circuit 52 in the power circuit provided in this embodiment optionally includes a control signal generation circuit 61 and a comparison and control circuit 62.

The control circuit 52 is logically divided into the control signal generation circuit 61 and the comparison and control circuit 62. The control signal generation circuit 61 is configured to generate a control signal according to the input voltage and output the control signal to the comparison and control circuit 62. The comparison and control circuit 62 is configured to control the working mode of the step-up/down converter 51 according to the control signal, so as to make the output voltage greater than or equal to the first output voltage amplitude and less than or equal to the second output voltage amplitude. The control signal generation circuit 61 and the comparison and control circuit 62 are only logically division of the control circuit 51 according to the functions. The control circuit 52 may be implemented by different physical devices as needed, which will be described in detail in the following embodiments.

Optionally, since the step-up/down converter 51 works in three modes: step-up, step-down and voltage-regulating, the step-up/down converter 51 may be logically divided into a step-up converter and a step-down converter.

The comparison and control circuit 62 is configured to: when the control signal generation circuit 61 generates a step-up control signal, switch on the step-up converter and switch off the step-down converter, so that the step-up converter works; when the control signal generation circuit 61 generates a step-down control signal, switch on the step-down converter and switch off the step-up converter, so that the step-down converter works; and when the control signal generation circuit 61 generates a voltage-regulating control signal, switch the step-up converter and the step-down converter, so that both of the step-up converter and the step-down converter do not work.

It suffices that the control signal generated by the control signal generation circuit 61 enables the comparison and control circuit 62 to control the output voltage of the step-up/down converter 51 to be included within a preset range. However, to enable the step-up/down converter 51 to work in an optimal state, the control signal generation circuit 61 needs to generate a corresponding control signal according to the variation law of the input voltage. It is to be understood that, to maintain the output voltage within a preset range, when the input voltage is too low, the control signal should be a signal capable of controlling the step-up/down converter 51 to perform the step-up operation; and when input voltage is too high, the control signal should be a signal capable of controlling the step-up/down converter 51 to perform the step-down operation. That is, a certain function relationship needs to exist between the input voltage and the output voltage of the power circuit.

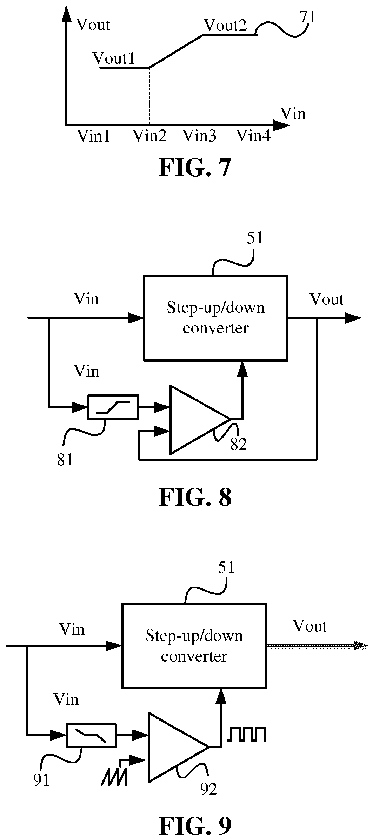

FIG. 7 is a graph illustrating a function relationship between an input voltage and an output voltage of a power circuit according to optional embodiments of the present invention. In FIG. 7, the horizontal coordinate represents the input voltage Vin of the power circuit, the vertical coordinate represents the output voltage Vout of the power circuit, and the curve 71 is a characteristic curve of the input voltage Vin and the output voltage Vout. Vout1 denotes a first output voltage amplitude and Vout2 denotes a second output voltage amplitude. The input range of the input voltage Vin of the power circuit is Vin1 to Vin4. Vin2 denotes a preset low voltage threshold and Vin3 denotes a preset high voltage threshold. When the input voltage is lower than the preset low voltage threshold, that is, Vin1 ≤ Vin < Vin2, the output voltage should be controlled to be equal to the first output voltage amplitude, that is, Vout = Vout1; when the input voltage is higher than the preset high voltage threshold, that is, Vin3 < Vin ≤ Vin4, the output voltage should be controlled to be equal to the second output voltage amplitude, that is, Vout = Vout2; and when the input voltage is included between the preset low voltage threshold and the preset high voltage threshold, that is, Vin2 ≤ Vin ≤ Vin3, the output voltage should be controlled to be equal to or greater than the first output voltage amplitude and less than or equal to the second output voltage amplitude, that is, Vout1 ≤ Vout ≤ Vout2.

According to graph of the function relationship shown in FIG. 7, the principle used by the control signal generation circuit 61 to generate a control signal according to the input voltage is: when the input voltage is lower than the preset low voltage threshold, the control signal generation circuit 61 generates a step-up control signal; when the input voltage is higher than the preset high voltage threshold, the control signal generation circuit 61 generates a step-down control signal; and when the input voltage is included between the preset low voltage threshold and the preset high voltage threshold, the control signal generation circuit 61 generates a voltage-regulating control signal. Correspondingly, when the control signal generation circuit 61 generates the step-up control signal, the comparison and control circuit 62 controls the step-up/down converter 51 to work in the step-up mode; when the control signal generation circuit 61 generates the step-down control signal, the comparison and control circuit 62 controls the step-up/down converter 51 to work in the step-down mode; and when the control signal generation circuit 61 generates the voltage-regulating control signal, the comparison and control circuit 62 controls the step-up/down converter 51 to work in the voltage-regulating mode.

FIGS. 5 and 6 show the basic structure and basic working principle of the power circuit provided in optional embodiments of the present invention. However, in practical applications, the comparison and control circuit 62 controls the step-up/down converter 51 in two manners: open-loop control and closed-loop control. The open-loop control means that the control of the step-up/down converter 51 by the comparison and control circuit 62 does not depend on the feedback of the output voltage, but depends on only the control signal generated by the control signal generation circuit 61. The closed-loop control means that the control of the step-up/down converter 51 by the comparison and control circuit 62 is determined by both the feedback of the output voltage and the control signal generated by the control signal generation circuit 61. The open-loop control and the closed-loop control of the power circuit provided in optional embodiments of the present invention are described below in detail by using embodiments.

FIG. 8 is a structure diagram of power circuit embodiment three according to optional embodiments of the present invention. As shown in FIG. 8, in the power circuit provided in this embodiment based on FIG. 6, a reference signal generation circuit 81 is provided in place of the control signal generation circuit 61 and a feedback control circuit 82 is provided in place of the comparison and control circuit 62.

The reference signal generation circuit 81 generates a reference signal according to an input voltage. The feedback control circuit 82 compares an output voltage of the step-up/down converter 51 with the reference signal outputted by the reference signal generation circuit 81, and then adjusts the working mode of the step-up/down converter 51 such that the output voltage is greater than or equal to a first output voltage amplitude and less than or equal to a second output voltage amplitude. Since the feedback control circuit 82 controls the step-up/down converter 51 according to the output voltage of the step-up/down converter 51 to form closed-loop control, the power circuit provided in this embodiment adopts closed-loop control.

The output end of the reference signal generation circuit 81 is connected to one input end of the feedback control circuit 82. The output end of the step-up/down converter 51 is also connected to another input end of the feedback control circuit 82. The feedback control circuit 82 collects the feedback signal of the output voltage of the step-up/down converter 51 to determine the output voltage and determine the error between the output voltage and the voltage of the reference signal so as to control the step-up/down converter 51 such that the output voltage of the step-up/down converter 51 is regulated to the voltage of the reference signal. The signal outputted to the step-up/down converter 51 by the feedback control circuit 82 is the error between the output voltage and the voltage of the reference signal. The step-up/down converter 51 adjusts the output voltage according to the received error.

The voltage of the reference signal generated by the reference signal generation circuit 81 is determined according to the characteristic curve shown in FIG. 7. When the input voltage is lower than a preset low voltage threshold, the voltage of the reference signal is equal to the first output voltage amplitude; when the input voltage is higher than a preset high voltage threshold, the voltage of the reference signal is equal to the second output voltage amplitude; and when the input voltage is included between the preset low voltage threshold and the preset high voltage threshold, the voltage of the reference signal is at a fixed ratio to the input voltage. It is to be noted that the structure of the step-up/down converter 51 in the power circuit may be similar to the non-isolated structure shown in FIG. 2, or may be similar to the isolated structure shown in FIG. 4. If the step-up/down converter 51 has the isolated structure, an isolating transformer is provided in the structure and thus the ratio of the reference signal to the input voltage is the same as the winding turns ratio of the isolating transformer in the step-up/down converter 51; if the step-up/down converter 51 has the non-isolated structure, the ratio of the reference signal to the input voltage should be 1.

FIG. 9 is a structure diagram of power circuit embodiment four according to optional embodiments of the present invention. As shown in FIG. 9, in the power circuit provided in this embodiment based on FIG. 6, a duty cycle generation circuit 91 is provided in place of the control signal generation circuit 61 and a PWM comparison circuit 92 is provided in place of the comparison and control circuit 62.

The duty cycle generation circuit 91 generates a duty cycle amplitude according to an input voltage. The PWM comparison circuit 92 generates a PWM control signal according to the duty cycle amplitude. The duty cycle of the PWM control signal is the duty cycle amplitude generated by the duty cycle generation circuit 91. The PWM comparison circuit 92 uses the generated PWM control signal to control the working mode of the step-up/down converter 51 such that the output voltage is greater than or equal to a first output voltage amplitude and less than or equal to a second output voltage amplitude. Since the PWM comparison circuit 92 generates the PWM control signal according to only the duty cycle amplitude generated by the duty cycle generation circuit 91 without depending on the output voltage of the step-up/down converter 51, open-loop control is formed. Therefore, the power circuit provided in this embodiment adopts the open-loop control. The duty cycle generation circuit 91 may generate the duty cycle amplitude in various manners. For example, the turn-off periods of multiple switching transistors are controlled to generate different duty cycle amplitudes.

The output end of the duty cycle generation circuit 91 is connected to an input end of the PWM comparison circuit 92. The triangular wave signal of the fixed period is inputted at another input end of the duty cycle generation circuit 91. The PWM comparison circuit 92 outputs the PWM control signal with a corresponding duty cycle amplitude according to the duty cycle amplitude outputted by the duty cycle generation circuit 91 and the triangular wave signal with the fixed period.

The duty cycle amplitude generated by the duty cycle generation circuit 91 is determined according to the characteristic curve of the input voltage and the output voltage as shown in FIG. 7. The duty cycle amplitude is determined according to the following parameters: the input voltage, a preset low voltage threshold, a preset high voltage threshold, and a transformer winding turns ratio of the power circuit. Similar to the embodiment shown in FIG. 8, if the step-up/down converter 51 has an isolated structure provided with an isolating transformer, the transformer winding turns ratio is the primary and secondary winding turns ratio of the isolating transformer in the step-up/down converter 51; if the step-up/down converter 51 has a non-isolated structure, the transformer winding turns ratio is 1.

Optionally, since the step-up/down converter 51 may work in three modes: step-up, step-down and voltage-regulating; correspondingly, the duty cycle amplitude generated by the duty cycle generation circuit 91 may be divided into a step-up mode duty cycle amplitude, a step-down mode duty cycle amplitude and a voltage-regulating mode duty cycle amplitude. The PWM comparison circuit 92 controls the step-up/down converter 51 to work in a corresponding working mode according to the duty cycle amplitude. It can be seen from the working principle of the PWM control circuit that, in the circuit controlled according to the PWM control signal, the relationship among the output voltage, the input voltage, and the duty cycle amplitude of the PWM control signal is: when the step-up/down converter 51 works in the step-up mode, $Vout = \dfrac{1}{(1-D1)} \times \dfrac{Vin}{N}$ , when the step-up/down converter 51 works in the step-down mode, $Vout = \dfrac{D2 \times Vin}{N}$ . Vout denotes the output voltage.

Vin denotes the input voltage. D1 denotes the step-up mode duty cycle amplitude. D2 denotes the step-down mode duty cycle amplitude. N denotes the transformer winding turns ratio of the power circuit. N is equal to 1 for a non-isolated power circuit.

In conjunction with the characteristic curve of the input voltage and the output voltage of the power circuit shown in FIG. 7, the law of the duty cycle amplitude generated by the duty cycle generation circuit 91 is obtained and described below.

When the input voltage is lower than the preset low voltage threshold, that is, Vin1 ≤ Vin < Vin2, the duty cycle generation circuit 91 generates the step-up mode duty cycle amplitude D1, where $D1=1-\dfrac{Vin}{N \times Vout1}$,

where Vout1 denotes the first output voltage amplitude. In this case, Vout = Vout1.

When the input voltage is higher than the preset high voltage threshold, that is, Vin3 < Vin ≤ Vin4, the duty cycle generation circuit 91 generates the step-down mode duty cycle amplitude D2, where

$D2=\dfrac{N \times Vout2}{Vin}$, where Vout2 denotes the second output voltage amplitude. In this case, Vout = Vout2.

When the input voltage is included between the preset low voltage threshold and the preset high voltage threshold, that is, Vin2 ≤ Vin ≤ Vin3, the duty cycle generation circuit 91 generates the voltage-regulating mode duty cycle amplitude D3, where D3 is equal to 1 or close to 1. In this case, $Vout=\dfrac{Vin}{N}$.

FIGS. 5, 6, 8 and 9 show the basic structure of the power circuit and two different control modes provided in optional embodiments of the present invention. The power circuit provided in optional embodiments of the present invention will be further described below in terms of circuit structure.

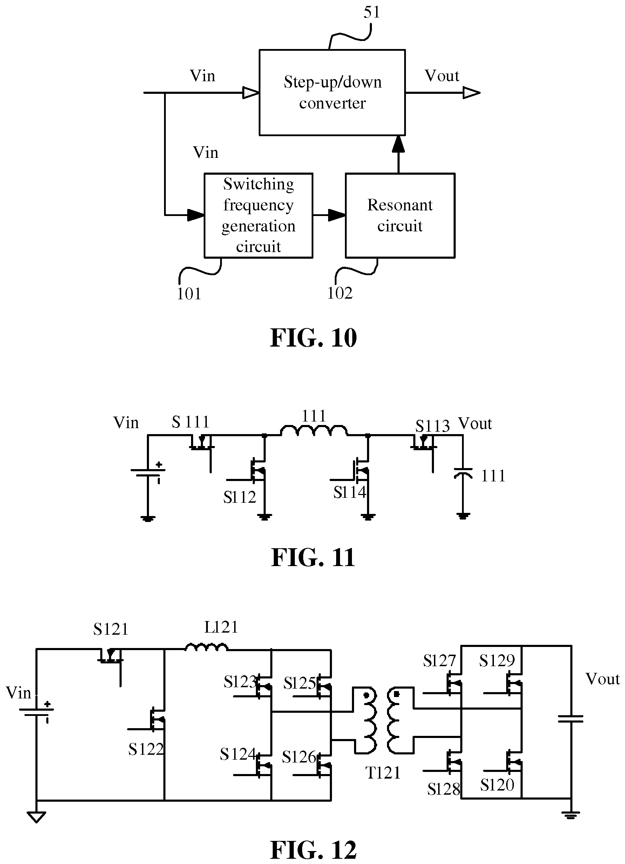

FIG. 10 is a structure diagram of power circuit embodiment five according to optional embodiments of the present invention. As shown in FIG. 10, in the power circuit provided in this embodiment based on FIG. 6, a switching frequency generation circuit 101 is provided in place of the control signal generation circuit 61 and a resonant circuit 102 is provided in place of the comparison and control circuit 62.

The switching frequency generation circuit 101 is configured to generate a switching frequency control signal according to an input voltage signal. When an input voltage is lower than a preset low voltage threshold, a switching frequency of the switching frequency control signal is less than a resonant frequency of the resonant circuit 102; when the input voltage is higher than a preset high voltage threshold, the switching frequency of the switching frequency control signal is greater than the resonant frequency of the resonant circuit 102; and when the input voltage is included between the preset low voltage threshold and the preset high voltage threshold, the switching frequency of the switching frequency control signal is equal to the resonant frequency of the resonant circuit 102. The resonant circuit 102 is configured to determine a resonance mode according to the switching frequency of the switching frequency control signal so as to control the step-up/down converter 51 to regulate the output voltage to be greater than or equal to a first output voltage amplitude and less than or equal to a second output voltage amplitude.

The working principle of the switching frequency generation circuit 101 and the resonant circuit 102 will be explained in the following embodiments.

FIG. 11 is a structure diagram of power circuit embodiment six according to optional embodiments of the present invention. As shown in FIG. 11, the power circuit provided in this embodiment includes switching transistors S111, S112, S113 and S114, an inductor L111, and a filter capacitor C111.

The power circuit provided in this embodiment is a non-isolated circuit based on open-loop control. When an input voltage Vin is lower than Vin2, that is, Vin1 ≤ Vin < Vin2, the switching transistor S111 is turned on, the switching transistor S112 is turned off, and the switching transistors S113 and S114 are controlled by PWM to form a step-up circuit, the entire circuit works in a step-up mode, and $Vout=\dfrac{1}{(1-D1)} \times Vin$ where

D1 denotes the PWM duty cycle of the main switching transistor S114 of the step-up circuit. When the input voltage Vin is higher than Vin3, that is, Vin3 ≤ Vin < Vin4, the switching transistor S113 is turned on, the switching transistor S114 is turned off, and the switching transistors S111 and S112 are controlled by PWM to form a step-down circuit, the entire circuit works in a step-down mode, and Vout=D2 × Vin, where D2 denotes the PWM duty cycle of the main switching transistor Sill of the step-down circuit. When the input voltage Vin is higher than Vin2 and lower than Vin3, that is, Vin2 ≤ Vin ≤ Vin3, the switching transistors S111 and S113 are turned on, the switching transistors S112 and S114 are turned off, that is, D1 = 0 and D2 = 1, the entire circuit works in a conductive coupling mode, Vout=Vin, there is no loss of power devices such as switching transistors and the ripple current of the inductor L111 is zero, there is no energy storage loss and the conversion efficiency is optimal.

In this embodiment, a step-up/down converter includes the inductor L111 which is an energy storage component for storing and releasing energy under the control of control signals having different duty cycles; the switching transistors S111, S112, S113 and S114 constitute a control circuit for implementing the functions of generating the control signals and controlling the working mode of the step-up/down converter according to the control signals. The switching transistors Sill and S113 are configured to detect the input voltage, determine to be turned on or turned off according to the magnitude of the input voltage and constitute a control signal generation circuit. The switching transistors Sill, S112, S113 and S114 constitute a comparison and control circuit for generating PWM control signals having different duty cycles in different states of the switching transistors Sill and S1 13 to control the inductor L111.

FIG. 12 is a structure diagram of power circuit embodiment seven according to optional embodiments of the present invention. As shown in FIG. 12, the power circuit provided in this embodiment includes switching transistors S121, S122, S123, S124, S125, S126, S127, S128, S129 and S120, an inductor L121, a transformer T121 and an output capacitor C121.

The power circuit provided in this embodiment is a circuit having an isolation function based on open-loop control. The switching transistors S121 and S122 and the inductor L121 form a pre-stage step-down circuit. The switching transistors S123 to S120 and the transformer T121 constitute a post-stage isolated full-bridge circuit. The output voltage is:

$$Vout=Vin \times D2 \times \frac{0.5}{(1-D1) \times N}.$$

When the input voltage Vin is lower than Vin2, that is, Vin1 ≤ Vin < Vin2, the switching transistor S121 is turned on, the switching transistor S122 is turned off, the pre-stage step-down circuit is conductive, and D2 = 1. The working duty cycle of the switching transistors S123 to S126 at the primary side of the transformer T121 in the post-stage isolated full-bridge circuit is greater than 50%. When the switching transistors S123 to S126 are turned on simultaneously, the input voltage Vin charges the inductor L121. When the switching transistors S123 to S126 are alternately turned on, that is, the switching transistors S123 and S126 turned on and the switching transistors S124 and S125 turned off, or the switching transistors S124 and S125 turned on and the switching transistors S123 and S126 turned off, the electric energy stored in the inductor L121 is discharged to the output capacitor C121 through the transformer T121 and a synchronous rectifier circuit composed of the switching transistors S127 to S120, and the entire circuit works in a step-up mode similar to a step-up working mode. The output voltage $Vout=Vin \times \frac{0.5}{(1-D1) \times N}$, wherein D1 denotes the PWM duty cycle of the switching transistors S123 to S126 at the primary side of the transformer T121 in the post-stage isolated full-bridge circuit, and N denotes the winding turns ratio of the transformer T121. When the input voltage Vin is higher than Vin3, that is, Vin3 < Vin ≤ Vin4, the switching transistors S121 and S122 work in a step-down mode, D2 < 1, the working duty cycle of the switching transistors S123 to S126 at the primary side of the transformer T121 in the post-stage isolated full-bridge circuit is close to or equal to 50%, and D1 is equal to or approximately equal to 0.5. The output voltage $Vout=\frac{Vin \times D2}{N}$. When the input voltage Vin is higher than Vin2 and lower than Vin3, that is, Vin2 ≤ Vin ≤ Vin3, the switching transistors S121 and S122 are turned off, the pre-stage step-down circuit is conductive coupling, D2 = 1, the working duty cycle of the switching transistors S123 to S126 at the primary side of the transformer T121 in the post-stage isolated full-bridge circuit is close to or equal to 50%, D1 is equal to or approximately equal to 0.5, and the output voltage

$$Vout=\frac{Vin}{N}.$$

In this embodiment, the inductor L121 is an energy storage component for storing and releasing energy under the control of control signals having different duty cycles, and the inductor L121, the transformer T121 and the synchronous rectifier circuit composed of the switching transistors S127 to S120 constitute a step-up/down converter; the switching transistors S121 to S126 constitute a control circuit for implementing the functions of generating a control signal and controlling the working mode of the step-up/down converter according to the control signal. The switching transistors S121 and S122 are configured to detect the input voltage, determine to be turned on or turned off according to the magnitude of the input voltage and constitute a control signal generation circuit. The switching transistors S123 to S126 constitute a comparison and control circuit for generating PWM control signals having different duty cycles in different states of the switching transistors S121 and S122 to control the inductor L121, the transformer T121 and the switching transistors S127 to S120.

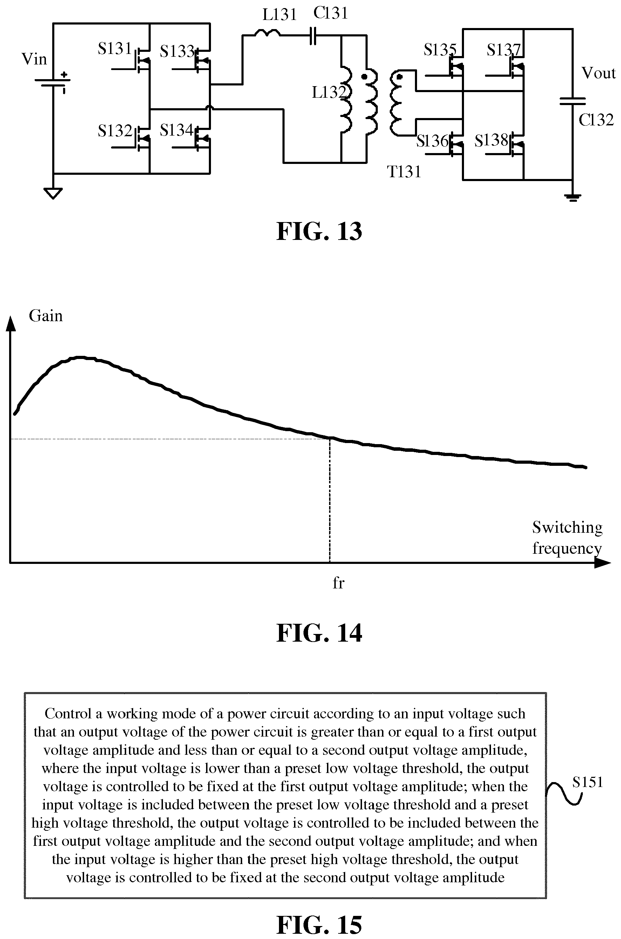

FIG. 13 is a structure diagram of power circuit embodiment eight according to optional embodiments of the present invention. As shown in FIG. 13, the power circuit provided in this embodiment includes switching transistors S131, S132, S133, S134, S135, S136, S137 and S138, inductors L131 and L132, a transformer T131 and capacitors C131 and C132.

The power circuit provided in this embodiment is a resonant circuit having an isolation function based on open-loop control. The switching transistors S131 to S134 work at a duty cycle of 50% and output square wave signals at different switching frequencies. The resonant circuit composed of the inductors L131 and L132 and the capacitor C131 show impedance of different magnitudes under square wave signals having different frequencies. Different output voltages are discharged to the output capacitor C132 through the transformer T131 and the synchronous rectifier circuit composed of the switching transistors S135 to S138.

FIG. 14 shows a gain curve of the power circuit of FIG. 13 as the resonant frequency varies. In FIG. 14, the horizontal coordinate represents the switching frequency of the switching transistors S131 to S134, the vertical coordinate represents the gain of the entire power circuit, and fr denotes the resonant frequency of the inductor L131 and the capacitor C131, where $fr=\frac{1}{2\pi \times L131 \times C131}$. When the switching frequency of the switching transistors S131 to S134 is equal to the resonant frequency fr, the impedance formed by the inductor L131 and the capacitor C111 connected in series is zero, the gain of the resonant circuit is 1, and the output voltage is $Vout = \dfrac{Vin}{N}$. When the switching frequency of the switching transistors S131 to S134 is less than the resonant frequency fr, the impedance of the inductor L131 and the capacitor C131 connected in series is capacitive, the gain of the resonant circuit formed by the inductor L131, the capacitor C131 and the inductor L132 connected in series is greater than 1, and the step-up function is implemented in the entire circuit. When the switching frequency of the switching transistors S131 to S134 is greater than the resonant frequency fr, the impedance formed by the inductor L131 and the capacitor C131 connected in series is inductive, the gain of the resonant circuit formed by the inductor L131, the capacitor C131 and the inductor L132 is less than 1, and the step-down function is implemented in the entire circuit. From the gain curve shown in FIG. 14, a correspondence between the switching frequency of the switching transistors S131 to S134 and the circuit gain may be determined. In conjunction with the characteristic curve of the input voltage and the output voltage shown in FIG. 7, the switching frequency of the switching transistors S131 to S134 at different values of the input voltage may be determined. The switching frequency of the switching transistors S131 to S134 refers to the frequency at which the switching transistors S131 and S134 and the switching transistors S132 and S133 are alternately turned on and off.

In this embodiment, the inductors L131 and L132 and the capacitor C131 are energy storage components for storing and releasing energy under the control of control signals having different frequencies, and the inductors L131 and L132, the capacitor C131, the transformer T131 and the synchronous rectifier circuit composed of the switching transistors S135 to S138 constitute a step-up/down converter; the switching transistors S131 to S134, the inductors L131 and L132 and the capacitor C131 constitute a control circuit for implementing the functions of generating a control signal and controlling the working mode of the step-up/down converter according to the control signal. The switching transistors S131 to S134 are configured to detect the input voltage, an output square waves having different frequencies under different values of the input voltage and constitute a control signal generation circuit. The inductors L131 and L132 and the capacitor C131 constitute a comparison and control circuit for generating the square wave having different frequencies. The resonant circuit composed of the inductors L131 and L132 and the capacitor C131 show different impedance values, thereby working in different states and achieving different gains.

FIG. 15 is a flowchart of power circuit control method embodiment one according to optional embodiments of the present invention. As shown in FIG. 15, the power circuit control method provided in this embodiment includes the step described below.

In step S151, the working mode of a power circuit is controlled according to an input voltage such that an output voltage of the power circuit is greater than or equal to a first output voltage amplitude and less than or equal to a second output voltage amplitude. When the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

The power circuit control method provided in this embodiment is used for implementing the processing of the power circuit shown in FIG. 5. The implementation principle and technical effects are similar and thus will not be repeated here again.

Optionally, the step of controlling the working mode of the power circuit according to the input voltage includes:

When the input voltage is lower than the preset low voltage threshold, controlling the power circuit to work in a step-up mode; when the input voltage is higher than the preset high voltage threshold, controlling the power circuit to work in a step-down mode; and when the input voltage is included between the preset low voltage threshold and the preset high voltage threshold, controlling the power circuit to work in a voltage-regulating mode.

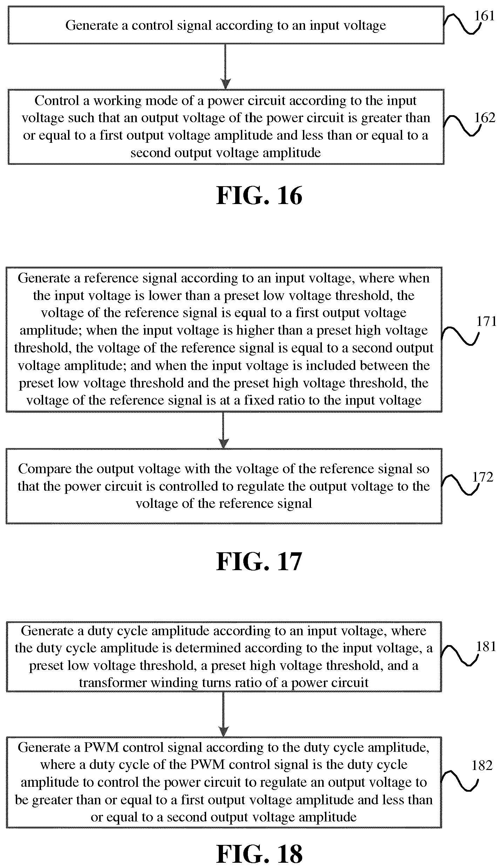

FIG. 16 is a flowchart of power circuit control method embodiment two according to optional embodiments of the present invention. As shown in FIG. 15, the power circuit control method provided in this embodiment includes the steps described below.

In step S161, a control signal is generated according to an input voltage.

In step S162, the working mode of a power circuit is controlled according to the input voltage such that an output voltage of the power circuit is greater than or equal to a first output voltage amplitude and less than or equal to a second output voltage amplitude.

The power circuit control method provided in this embodiment is used for implementing the processing of the power circuit shown in FIG. 6. The implementation principle and technical effects are similar and thus will not be repeated here again.

Optionally, in the embodiment shown in FIG. 16, step S161 includes: when the input voltage is lower than a preset low voltage threshold, generating a step-up control signal; when the input voltage is higher than a preset high voltage threshold, generating a step-down control signal; and when the input voltage is included between the preset low voltage threshold and the preset high voltage threshold, generating a voltage-regulating control signal. Step S162 includes: when the step-up control signal is generated, controlling the power circuit to work in a step-up mode; when the step-down control signal is generated, controlling the power circuit to work in a step-down mode; and when the voltage-regulating control signal is generated, controlling the power circuit to work in a voltage-regulating mode.

FIG. 17 is a flowchart of power circuit control method embodiment three according to optional embodiments of the present invention. As shown in FIG. 17, the power circuit control method provided in this embodiment includes the steps described below.

In step S171, a reference signal is generated according to an input voltage. When the input voltage is lower than a preset low voltage threshold, the voltage of the reference signal is equal to a first output voltage amplitude; when the input voltage is higher than a preset high voltage threshold, the voltage of the reference signal is equal to a second output voltage amplitude; and when the input voltage is included between the preset low voltage threshold and the preset high voltage threshold, the voltage of the reference signal is at a fixed ratio to the input voltage.

In step S172, the output voltage is compared with the voltage of the reference signal so that the power circuit is controlled to regulate the output voltage to the voltage of the reference signal.

The power circuit control method provided in this embodiment is used for implementing the processing of the power circuit shown in FIG. 8. The implementation principle and technical effects are similar and thus will not be repeated here again.

FIG. 18 is a flowchart of power circuit control method embodiment four according to optional embodiments of the present invention. As shown in FIG. 18, the power circuit control method provided in this embodiment includes the steps described below.

In step S181, a duty cycle amplitude is generated according to an input voltage. The duty cycle amplitude is determined according to the input voltage, a preset low voltage threshold, a preset high voltage threshold, and a transformer winding turns ratio of a power circuit.

In step S182, a PWM control signal is generated according to the duty cycle amplitude. A duty cycle of the PWM control signal is the duty cycle amplitude to control the power circuit to regulate an output voltage to be greater than or equal to a first output voltage amplitude and less than or equal to a second output voltage amplitude.

The power circuit control method provided in this embodiment is used for implementing the processing of the power circuit shown in FIG. 9. The implementation principle and technical effects are similar and thus will not be repeated here again.

Optionally, in the embodiment shown in FIG. 15, step S151 includes: generating a step-down mode duty cycle amplitude D1 when the input voltage is higher than the preset high voltage threshold, where

$$D1 = \frac{N \times Vout1}{Vin},$$ where N denotes the transformer winding turns ratio of the power circuit, N is equal to 1 for a non-isolated power circuit, Vin denotes the input voltage, and Vout1 denotes the second output voltage amplitude; generating a step-up mode duty cycle amplitude D2 when the input voltage is lower than the preset low voltage threshold, where $$D2 = 1 - \frac{Vin}{N \times Vout2},$$ where Vout2 denotes the first output voltage amplitude; and generating a voltage-regulating mode duty cycle amplitude D3 when the input voltage is included between the preset low voltage threshold and the preset high voltage threshold, where D3 = 1.

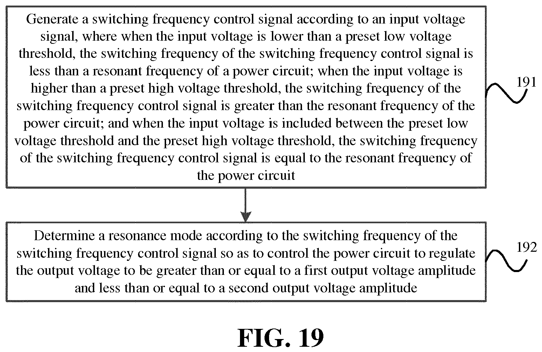

FIG. 19 is a flowchart of power circuit control method embodiment five according to optional embodiments of the present invention. As shown in FIG. 19, the power circuit control method provided in this embodiment includes the steps described below.

In step S191, a switching frequency control signal is generated according to an input voltage signal. When the input voltage is lower than a preset low voltage threshold, the switching frequency of the switching frequency control signal is less than a resonant frequency of a power circuit; when the input voltage is higher than a preset high voltage threshold, the switching frequency of the switching frequency control signal is greater than the resonant frequency of the power circuit; and when the input voltage is included between the preset low voltage threshold and the preset high voltage threshold, the switching frequency of the switching frequency control signal is equal to the resonant frequency of the power circuit.

In step S192, a resonance mode is determined according to the switching frequency of the switching frequency control signal so as to control the power circuit to regulate the output voltage to be greater than or equal to a first output voltage amplitude and less than or equal to a second output voltage amplitude.

An optional embodiment of the present invention provides a computer-readable storage medium storing computer programs. Optionally, in the embodiment, the storage medium may be configured to store program codes for executing the steps described below.

In S1, the working mode of a power circuit is controlled according to an input voltage of the power circuit such that an output voltage of the power circuit is greater than or equal to a first output voltage amplitude and less than or equal to a second output voltage amplitude.

In S2, when the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

Optionally, the storage medium is further configured to store program codes for executing the step described below.

In S1, when the input voltage is lower than the preset low voltage threshold, the power circuit is controlled to work in a step-up mode; when the input voltage is higher than the preset high voltage threshold, the power circuit is controlled to work in a step-down mode; and when the input voltage is included between the preset low voltage threshold and the preset high voltage threshold, the power circuit is controlled to work in a voltage-regulating mode.

Optionally, the storage medium is further configured to store program codes for executing the steps described below.

In S1, a control signal is generated according to the input voltage.

In S2, the working mode of the power circuit is controlled according to the control signal.

Optionally, the storage medium is further configured to store program codes for executing the step described below.

In S1, when the input voltage is lower than the preset low voltage threshold, a step-up control signal is generated; when the input voltage is higher than the preset high voltage threshold, a step-down control signal is generated; and when the input voltage is included between the preset low voltage threshold and the preset high voltage threshold, a voltage-regulating control signal is generated.

Optionally, the step of controlling the working mode of the power circuit according to the control signal includes: when the step-up control signal is generated, controlling the power circuit to work in the step-up mode; when the step-down control signal is generated, controlling the power circuit to work in the step-down mode; and when the voltage-regulating control signal is generated, controlling the power circuit to work in the voltage-regulating mode.

Optionally, the storage medium is further configured to store program codes for executing the step described below.

In S1, a reference signal is generated according to an input voltage. When the input voltage is lower than a preset low voltage threshold, the voltage of the reference signal is equal to a first output voltage amplitude; when the input voltage is higher than a preset high voltage threshold, the voltage of the reference signal is equal to a second output voltage amplitude; and when the input voltage is included between the preset low voltage threshold and the preset high voltage threshold, the voltage of the reference signal is at a fixed ratio to the input voltage.

Optionally, the storage medium is further configured to store program codes for executing the step described below: the output voltage is compared with the voltage of the reference signal so that the power circuit is controlled to regulate the output voltage to the voltage of the reference signal.

Optionally, the storage medium is further configured to store program codes for executing the step described below.

In S1, a duty cycle amplitude is generated according to an input voltage, where the duty cycle amplitude is determined according to the input voltage, a preset low voltage threshold, a preset high voltage threshold, and a transformer winding turns ratio of a power circuit.

Optionally, the storage medium is further configured to store program codes for executing the step described below: a PWM control signal is generated according to the duty cycle amplitude. A duty cycle of the PWM control signal is the duty cycle amplitude to control the power circuit to regulate an output voltage to be greater than or equal to a first output voltage amplitude and less than or equal to a second output voltage amplitude.

Optionally, the storage medium is further configured to store program codes for executing the step described below.

In S1, a switching frequency control signal is generated according to an input voltage signal. When the input voltage is lower than a preset low voltage threshold, the switching frequency of the switching frequency control signal is less than a resonant frequency of a power circuit; when the input voltage is higher than a preset high voltage threshold, the switching frequency of the switching frequency control signal is greater than the resonant frequency of the power circuit; and when the input voltage is included between the preset low voltage threshold and the preset high voltage threshold, the switching frequency of the switching frequency control signal is equal to the resonant frequency of the power circuit.

Optionally, the storage medium is further configured to store program codes for executing the step described below: a resonance mode is determined according to the switching frequency of the switching frequency control signal so as to control the power circuit to regulate the output voltage to be greater than or equal to a first output voltage amplitude and less than or equal to a second output voltage amplitude.

It is to be understood by those skilled in the art that embodiments of the present invention may be provided as methods, systems or computer program products. Therefore, the present invention may be implemented by hardware, software, or a combination of hardware and software. In addition, the present invention may take the form of a computer program product implemented in one or more computer-usable storage media (including, but not limited to, a disk memory and an optical memory) that includes computer-usable program codes.

The above are only preferred embodiments of the present invention and are not intended to limit the scope of the present invention.

**INDUSTRIAL APPLICABILITY**

In technical solutions of the present invention, optional embodiments disclose a power circuit, a power circuit control method and a storage medium. The power circuit includes: a step-up/down converter and a control circuit. The step-up/down converter is configured to convert an input voltage to an output voltage. The control circuit is configured to control a working mode of the step-up/down converter according to the input voltage such that the output voltage is greater than or equal to a first output voltage amplitude and less than or equal to a second output voltage amplitude. When the input voltage is lower than a preset low voltage threshold, the output voltage is controlled to be fixed at the first output voltage amplitude; when the input voltage is included between the preset low voltage threshold and a preset high voltage threshold, the output voltage is controlled to be included between the first output voltage amplitude and the second output voltage amplitude; and when the input voltage is higher than the preset high voltage threshold, the output voltage is controlled to be fixed at the second output voltage amplitude.

**Claims**

1. A power circuit, comprising:

    a step-up/down converter, which is configured to convert an input voltage to an output voltage; and
    a control circuit, which is configured to control a working mode of the step-up/down converter according to the input voltage so as to ensure that the output voltage is greater than or equal to a first output voltage amplitude and is less than or equal to a second output voltage amplitude,

    wherein when the input voltage is lower than a preset low voltage threshold, the output voltage is controlled to be fixed at the first output voltage amplitude; when the input voltage is comprised between the preset low voltage threshold and a preset high voltage threshold, the output voltage is controlled to be comprised between the first output voltage amplitude and the second output voltage amplitude; and when the input voltage is higher than the preset high voltage threshold, the output voltage is controlled to be fixed at the second output voltage amplitude.

2. The power circuit of claim 1, wherein the control circuit is configured to:

    when the input voltage is lower than the preset low voltage threshold, control the step-up/down converter to work in a step-up mode; when the input voltage is higher than the preset high voltage threshold, control the step-up/down converter to work in a step-down mode; and when the input voltage is comprised between the preset low voltage threshold and the preset high voltage threshold, control the step-up/down converter to work in a voltage-regulating mode.

3. The power circuit of claim 2, wherein the control circuit comprises:

    a control signal generation circuit, which is configured to:

        when the input voltage is lower than the preset low voltage threshold, generate a step-up control signal; when the input voltage is higher than the preset high voltage threshold, generate a step-down control signal; and when the input voltage is comprised between the preset low voltage threshold and the preset high voltage threshold, generate a voltage-regulating control signal; and

    a comparison and control circuit, which is configured to:

        when the control signal generation circuit generates the step-up control signal, control the step-up/down converter to work in the step-up mode; when the control signal generation circuit generates the step-down control signal, control the step-up/down converter to work in the step-down mode; and when the control signal generation circuit generates the voltage-regulating control signal, control the step-up/down converter to work in the voltage-regulating mode.

4. The power circuit of claim 3, wherein the step-up/down converter comprises a step-up converter and a step-down converter,
    wherein the comparison and control circuit is configured to:

        when the control signal generation circuit generates the step-up control signal, switch on the step-up converter to work and switch off the step-down converter; when the control signal generation circuit generates the step-down control signal, switch on the step-down converter to work and switch off the step-up converter; and

when the control signal generation circuit generates the voltage-regulating control signal, switch off the step-up converter and the step-down converter to not work.

5. The power circuit of claim 3 or 4, wherein the control signal generation circuit comprises:
a reference signal generation circuit, which is configured to generate a reference signal according to the input voltage, wherein when the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is comprised between the preset low voltage threshold and the preset high voltage threshold, the voltage of the reference signal is at a fixed ratio to the input voltage;
the comparison and control circuit comprises:
a feedback control circuit, which is configured to compare the output voltage with the voltage of the reference signal so as to control the step-up/down converter to regulate the output voltage to the voltage of the reference signal.

6. The power circuit of claim 3 or 4, wherein the control signal generation circuit comprises:
a duty cycle generation circuit, which is configured to generate a duty cycle amplitude according to the input voltage, wherein the duty cycle amplitude is determined according to the input voltage, the preset low voltage threshold, the preset high voltage threshold, and a transformer winding turns ratio of the power circuit;
the comparison and control circuit comprises:
a pulse width modulation (PWM) comparison circuit, which is configured to generate a PWM control signal according to the duty cycle amplitude, wherein a duty cycle of the PWM control signal is the duty cycle amplitude, and the PWM control signal is configured to control the step-up/down converter to regulate the output voltage to be greater than or equal to the first output voltage amplitude and to be less than or equal to the second output voltage amplitude.

7. The power circuit of claim 6, wherein the duty cycle generation circuit is configured to:

when the input voltage is lower than the preset low voltage threshold, generate a step-up mode duty cycle amplitude D1, wherein

$$D1 = 1 - \frac{Vin}{N \times Vout1},$$ wherein N denotes the transformer winding turns ratio of the power circuit, N is equal to 1 for a non-isolated power circuit, Vin denotes the input voltage, and Vout1 denotes the first output voltage amplitude;
when the input voltage is higher than the preset high voltage threshold, generate a step-down mode duty cycle amplitude D2, wherein

$$D2 = \frac{N \times Vout2}{Vin},$$ wherein Vout2 denotes the second output voltage amplitude; and
when the input voltage is comprised between the preset low voltage threshold and the preset high voltage threshold, generate a voltage-regulating mode duty cycle amplitude D3, wherein D3 = 1.

8. The power circuit of claim 3 or 4, wherein the control signal generation circuit comprises a switching frequency generation circuit and a resonant circuit;
the switching frequency generation circuit is configured to generate a switching frequency control signal according to the input voltage, wherein when the input voltage is lower than the preset low voltage threshold, a switching frequency of the switching frequency control signal is less than a resonant frequency of the resonant circuit; when the input voltage is higher than the preset high voltage threshold, the switching frequency of the switching frequency control signal is greater than the resonant frequency of the resonant circuit; and when the input voltage is comprised between the preset low voltage threshold and the preset high voltage threshold, the switching frequency of the switching frequency control signal is equal to the resonant frequency of the resonant circuit;
the resonant circuit is configured to determine a resonance mode according to the switching frequency of the switching frequency control signal so as to control the step-up/down converter to regulate the output voltage to be greater than or equal to the first output voltage amplitude and to be less than or equal to the second output voltage amplitude.

9. A power circuit control method, comprising:
controlling a working mode of a power circuit according to an input voltage so as to ensure that an output voltage of the power circuit is greater than or equal to a first output voltage amplitude and is less than or equal to a second output voltage amplitude,
wherein when the input voltage is lower than a preset low voltage threshold, the output voltage is controlled to be fixed at the first output voltage amplitude; when the input voltage is comprised between the preset low voltage threshold and a preset high voltage threshold, the output voltage is controlled to be comprised between the first output voltage amplitude and the second output voltage amplitude; and when the input voltage is higher than the preset high voltage threshold, the output voltage is controlled to be fixed at the second output voltage amplitude.

10. The method of claim 9, wherein controlling the working mode of the power circuit according to the input voltage comprises:

when the input voltage is lower than the preset low voltage threshold, controlling the power circuit to work in a step-up mode;
when the input voltage is higher than the preset high voltage threshold, controlling the power circuit to work in a step-down mode; and
when the input voltage is comprised between the preset low voltage threshold and the preset high voltage threshold, controlling the power circuit to work in a voltage-regulating mode.

11. The method of claim 10, wherein controlling the working mode of the power circuit according to the input voltage comprises:

generating a control signal according to the input voltage; and
controlling the working mode of the power circuit according to the control signal.

12. The method of claim 11, wherein generating the control signal according to the input voltage comprises:

when the input voltage is lower than the preset low voltage threshold, generating a step-up control signal;
when the input voltage is higher than the preset high voltage threshold, generating a step-down control signal; and
when the input voltage is comprised between the preset low voltage threshold and the preset high voltage threshold, generating a voltage-regulating control signal;

wherein controlling the working mode of the power circuit according to the control signal comprises:

when the step-up control signal is generated, controlling the power circuit to work in the step-up mode;
when the step-down control signal is generated, controlling the power circuit to work in the step-down mode; and
when the voltage-regulating control signal is generated, controlling the power circuit to work in the voltage-regulating mode.

13. The method of claim 11 or 12, wherein generating the control signal according to the input voltage comprises:

generating a reference signal according to the input voltage, wherein when the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is comprised between the preset low voltage threshold and the preset high voltage threshold, the voltage of the reference signal is at a fixed ratio to the input voltage; wherein controlling the working mode of the power circuit according to the control signal comprises: comparing the output voltage with the voltage of the reference signal so as to control the power circuit to regulate the output voltage to the voltage of the reference signal.

14. The method of claim 11 or 12, wherein generating the control signal according to the input voltage comprises:
generating a duty cycle amplitude according to the input voltage, wherein the duty cycle amplitude is determined according to the input voltage, the preset low voltage threshold, the preset high voltage threshold, and a transformer winding turns ratio of the power circuit;
wherein controlling the working mode of the power circuit according to the control signal comprises:
generating a pulse width modulation (PWM) control signal according to the duty cycle amplitude, wherein a duty cycle of the PWM control signal is the duty cycle amplitude to control the power circuit to regulate the output voltage to be greater than or equal to the first output voltage amplitude and to be less than or equal to the second output voltage amplitude.

15. The method of claim 14, wherein generating the duty cycle amplitude according to the input voltage comprises:

when the input voltage is higher than the preset high voltage threshold, generating a step-down mode duty cycle amplitude D1, wherein

$$D1 = \frac{N \times Vout1}{Vin},$$ wherein N denotes the transformer winding turns ratio of the power circuit, N is equal to 1 for a non-isolated power circuit, Vin denotes the input voltage, and Vout1 denotes the second output voltage amplitude;
when the input voltage is lower than the preset low voltage threshold, generating a step-up mode duty cycle amplitude D2, wherein

$$D2 = 1 - \frac{Vin}{N \times Vout2},$$ wherein Vout2 denotes

the first output voltage amplitude; and

when the input voltage is comprised between the preset low voltage threshold and the preset high voltage threshold, generating a voltage-regulating mode duty cycle amplitude D3, wherein D3 = 1.

16. The method of claim 11 or 12, wherein generating the control signal according to the input voltage comprises:

generating a switching frequency control signal according to the input voltage, wherein when the input voltage is lower than the preset low voltage threshold, a switching frequency of the switching frequency control signal is less than a resonant frequency of the power circuit; when the input voltage is higher than the preset high voltage threshold, the switching frequency of the switching frequency control signal is greater than the resonant frequency of the power circuit; and when the input voltage is comprised between the preset low voltage threshold and the preset high voltage threshold, the switching frequency of the switching frequency control signal is equal to the resonant frequency of the power circuit;

wherein controlling the working mode of the power circuit according to the control signal comprises:

determining a resonance mode according to the switching frequency of the switching frequency control signal so as to control the power circuit to regulate the output voltage to be greater than or equal to the first output voltage amplitude and to be less than or equal to the second output voltage amplitude.

17. A computer-readable storage medium storing computer programs, wherein the computer programs cause a computer to perform the following processing:

controlling a working mode of a power circuit according to an input voltage of the power circuit so as to ensure that an output voltage of the power circuit is greater than or equal to a first output voltage amplitude and is less than or equal to a second output voltage amplitude, wherein when the input voltage is lower than a preset low voltage threshold, the output voltage is controlled to be fixed at the first output voltage amplitude; when the input voltage is comprised between the preset low voltage threshold and a preset high voltage threshold, the output voltage is controlled to be comprised between the first output voltage amplitude and the second output voltage amplitude; and when the input voltage is higher than the preset high voltage threshold, the output voltage is controlled to be fixed at the second output voltage amplitude.

18. The storage medium of claim 17, wherein controlling the working mode of the power circuit according to the input voltage comprises:

when the input voltage is lower than the preset low voltage threshold, controlling the power circuit to work in a step-up mode;

when the input voltage is higher than the preset high voltage threshold, controlling the power circuit to work in a step-down mode; and

when the input voltage is comprised between the preset low voltage threshold and the preset high voltage threshold, controlling the power circuit to work in a voltage-regulating mode.

19. The storage medium of claim 18, wherein controlling the working mode of the power circuit according to the input voltage comprises:

generating a control signal according to the input voltage; and

controlling the working mode of the power circuit according to the control signal.

20. The storage medium of claim 19, wherein generating the control signal according to the input voltage comprises:

when the input voltage is lower than the preset low voltage threshold, generating a step-up control signal;

when the input voltage is higher than the preset high voltage threshold, generating a step-down control signal; and

when the input voltage is comprised between the preset low voltage threshold and the preset high voltage threshold, generating a voltage-regulating control signal;

wherein controlling the working mode of the power circuit according to the control signal comprises:

when the step-up control signal is generated, controlling the power circuit to work in the step-up mode;

when the step-down control signal is generated, controlling the power circuit to work in the step-down mode; and

when the voltage-regulating control signal is generated, controlling the power circuit to work in the voltage-regulating mode.

21. The storage medium of claim 19 or 20, wherein generating the control signal according to the input voltage comprises:

generating a reference signal according to the input voltage, wherein when the input voltage is lower than the preset low voltage threshold, a voltage of the reference signal is equal to the first output voltage amplitude; when the input voltage is higher than the preset high voltage threshold, the voltage of the reference signal is equal to the second output voltage amplitude; and when the input voltage is comprised between the preset low voltage threshold and the preset high voltage threshold, the voltage of the reference signal is at a fixed ratio to the input voltage; wherein controlling the working mode of the power circuit according to the control signal comprises: comparing the output voltage with the voltage of the reference signal so as to control the power circuit to regulate the output voltage to the voltage of the reference signal.

22. The method of claim 19 or 20, wherein generating the control signal according to the input voltage comprises:
   generating a duty cycle amplitude according to the input voltage, wherein the duty cycle amplitude is determined according to the input voltage, the preset low voltage threshold, the preset high voltage threshold, and a transformer winding turns ratio of the power circuit;
   wherein controlling the working mode of the power circuit according to the control signal comprises: generating a pulse width modulation (PWM) control signal according to the duty cycle amplitude, wherein a duty cycle of the PWM control signal is the duty cycle amplitude to control the power circuit to regulate the output voltage to be greater than or equal to the first output voltage amplitude and to be less than or equal to the second output voltage amplitude.

23. The method of claim 22, wherein generating the duty cycle amplitude according to the input voltage comprises:

   when the input voltage is higher than the preset high voltage threshold, generating a step-down mode duty cycle amplitude D1, wherein

   $$D1 = \frac{N \times Vout1}{Vin},$$ wherein N denotes the transformer winding turns ratio of the power circuit, N is equal to 1 for a non-isolated power circuit, Vin denotes the input voltage, and Vout1 denotes the second output voltage amplitude;
   when the input voltage is lower than the preset low voltage threshold, generating a step-up mode duty cycle amplitude D2, wherein

   $$D2 = 1 - \frac{Vin}{N \times Vout2},$$ wherein Vout2 denotes

   the first output voltage amplitude; and
   when the input voltage is comprised between the preset low voltage threshold and the preset high voltage threshold, generating a voltage-regulating mode duty cycle amplitude D3, wherein D3 = 1.

24. The method of claim 19 or 20, wherein generating the control signal according to the input voltage comprises:
   generating a switching frequency control signal according to the input voltage, wherein when the input voltage is lower than the preset low voltage threshold, a switching frequency of the switching frequency control signal is less than a resonant frequency of the power circuit; when the input voltage is higher than the preset high voltage threshold, the switching frequency of the switching frequency control signal is greater than the resonant frequency of the power circuit; and when the input voltage is comprised between the preset low voltage threshold and the preset high voltage threshold, the switching frequency of the switching frequency control signal is equal to the resonant frequency of the power circuit;
   wherein controlling the working mode of the power circuit according to the control signal comprises: determining a resonance mode according to the switching frequency of the switching frequency control signal so as to control the power circuit to regulate the output voltage to be greater than or equal to the first output voltage amplitude and to be less than or equal to the second output voltage amplitude.

**FIG. 1**

**FIG. 2**

**FIG. 3**

**FIG. 4**

**FIG. 5**

**FIG. 6**

**FIG. 7**

**FIG. 8**

**FIG. 9**

51

Vin → Step-up/down converter → Vout

Vin

Switching frequency generation circuit → Resonant circuit

101          102

**FIG. 10**

Vin  S 111         111        S113 Vout

+

S112          S114          111

**FIG. 11**

S121    L121

Vin  +

S122

S123  S125          S127  S129          Vout

S124  S126          S128  S120

T121

**FIG. 12**

L131  C131

Vin

S131  S133

S132  S134

L132  T131

S135  S137

S136  S138

Vout

C132

## FIG. 13

Gain

Switching
frequency

fr

## FIG. 14

Control a working mode of a power circuit according to an input voltage such
that an output voltage of the power circuit is greater than or equal to a first output
voltage amplitude and less than or equal to a second output voltage amplitude,
where the input voltage is lower than a preset low voltage threshold, the output
voltage is controlled to be fixed at the first output voltage amplitude; when the
input voltage is included between the preset low voltage threshold and a preset
high voltage threshold, the output voltage is controlled to be included between the
first output voltage amplitude and the second output voltage amplitude; and when
the input voltage is higher than the preset high voltage threshold, the output
voltage is controlled to be fixed at the second output voltage amplitude

S151

## FIG. 15

| Generate a control signal according to an input voltage | 161 |

| Control a working mode of a power circuit according to the input voltage such that an output voltage of the power circuit is greater than or equal to a first output voltage amplitude and less than or equal to a second output voltage amplitude | 162 |

## FIG. 16

| Generate a reference signal according to an input voltage, where when the input voltage is lower than a preset low voltage threshold, the voltage of the reference signal is equal to a first output voltage amplitude; when the input voltage is higher than a preset high voltage threshold, the voltage of the reference signal is equal to a second output voltage amplitude; and when the input voltage is included between the preset low voltage threshold and the preset high voltage threshold, the voltage of the reference signal is at a fixed ratio to the input voltage | 171 |

| Compare the output voltage with the voltage of the reference signal so that the power circuit is controlled to regulate the output voltage to the voltage of the reference signal | 172 |

## FIG. 17

| Generate a duty cycle amplitude according to an input voltage, where the duty cycle amplitude is determined according to the input voltage, a preset low voltage threshold, a preset high voltage threshold, and a transformer winding turns ratio of a power circuit | 181 |

| Generate a PWM control signal according to the duty cycle amplitude, where a duty cycle of the PWM control signal is the duty cycle amplitude to control the power circuit to regulate an output voltage to be greater than or equal to a first output voltage amplitude and less than or equal to a second output voltage amplitude | 182 |

## FIG. 18

Generate a switching frequency control signal according to an input voltage signal, where when the input voltage is lower than a preset low voltage threshold, the switching frequency of the switching frequency control signal is less than a resonant frequency of a power circuit; when the input voltage is higher than a preset high voltage threshold, the switching frequency of the switching frequency control signal is greater than the resonant frequency of the power circuit; and when the input voltage is included between the preset low voltage threshold and the preset high voltage threshold, the switching frequency of the switching frequency control signal is equal to the resonant frequency of the power circuit

191

Determine a resonance mode according to the switching frequency of the switching frequency control signal so as to control the power circuit to regulate the output voltage to be greater than or equal to a first output voltage amplitude and less than or equal to a second output voltage amplitude

192

# FIG. 19

# INTERNATIONAL SEARCH REPORT

International application No.

PCT/CN2017/089397

### A. CLASSIFICATION OF SUBJECT MATTER

H02M 3/155 (2006.01) i

According to International Patent Classification (IPC) or to both national classification and IPC

### B. FIELDS SEARCHED

Minimum documentation searched (classification system followed by classification symbols)

H02M

Documentation searched other than minimum documentation to the extent that such documents are included in the fields searched

Electronic data base consulted during the international search (name of data base and, where practicable, search terms used)

CNABS, DWPI, SIPOABS, CNKI, IEEE: 升压, 降压, 转换, 切换, 输入电压, 输出电压, 阈值, 范围, boost, buck, conver+, switch+, input voltage, output voltage, threshold, range

### C. DOCUMENTS CONSIDERED TO BE RELEVANT

| Category* | Citation of document, with indication, where appropriate, of the relevant passages | Relevant to claim No. |
|---|---|---|
| X | CN 103155390 A (HEWLETT-PACKARD DEVELOPMENT COMPANY, L.P.), 12 June 2013 (12.06.2013), description, paragraphs 0006-0021, and figures 1-4 | 1-24 |
| A | CN 103580467 A (OSRAM GMBH), 12 February 2014 (12.02.2014), entire document | 1-24 |
| A | CN 204721234 U (ZTE CORP.), 21 October 2015 (21.10.2015), entire document | 1-24 |
| A | US 7379309 B2 (VANNER INC.), 27 May 2008 (27.05.2008), entire document | 1-24 |

☐ Further documents are listed in the continuation of Box C.   ☒ See patent family annex.

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 24 August 2017 | 26 September 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>XU, Zhenxia<br><br>Telephone No. (86-10) 62411785 |

Form PCT/ISA/210 (second sheet) (July 2009)

## INTERNATIONAL SEARCH REPORT
### Information on patent family members

International application No.

PCT/CN2017/089397

| Patent Documents referred in the Report | Publication Date | Patent Family | Publication Date |
|---|---|---|---|
| CN 103155390 A | 12 June 2013 | GB 2498027 A | 03 July 2013 |
| | | GB 2498027 B | 26 August 2015 |
| | | WO 2012057730 A1 | 03 May 2012 |
| | | US 2012249110 A1 | 04 October 2012 |
| | | CN 103155390 B | 03 August 2016 |
| | | US 9118243 B2 | 25 August 2015 |
| | | DE 112010005789 T5 | 08 May 2013 |
| | | GB 201217569 D0 | 14 November 2012 |
| | | US 2015331440 A1 | 19 November 2015 |
| CN 103580467 A | 12 February 2014 | None | |
| CN 204721234 U | 21 October 2015 | None | |
| US 7379309 B2 | 27 May 2008 | US 2005152159 A1 | 14 July 2005 |

Form PCT/ISA/210 (patent family annex) (July 2009)